# EUROPÄISCHE PATENTSCHRIFT

(11) **EP 3 293 048 B1**
(45) Veröffentlichungstag und Bekanntmachung des Hinweises auf die Patenterteilung: **10.07.2019**
(21) Anmeldenummer: 17189397.7
(22) Anmeldetag: 05.09.2017
(51) Int. Cl.: B60P 3/08

(54) **LADEPLATTFORM**
LOADING PLATFORM
PLATEFORME DE CHARGEMENT

(30) Priorität: 07.09.2016 AT 507892016
(43) Veröffentlichungstag der Anmeldung: 14.03.2018
(73) Patentinhaber: Kässbohrer Transport Technik GmbH, 5301 Eugendorf (AT)
(72) Erfinder: EBERHARTINGER, Alexander, 5300 Hallwang (AT)
(74) Vertreter: Torggler & Hofinger Patentanwälte

(56) Entgegenhaltungen:
- EP-A1- 0 418 178

## Beschreibung

Die Erfindung betrifft eine Ladeplattform für einen Fahrzeugtransporter mit den Merkmalen des Oberbegriffs des Anspruchs 1, einen Aufbau für einen Fahrzeugtransporter mit einer solchen Ladeplattform und einen Fahrzeugtransporter mit einer solchen Ladeplattform oder mit einem solchen Aufbau.

Die WO 2015/055967 A2 zeigt eine nicht gattungsgemäße Ladeplattform mit einem ein Hebewerk aufweisenden Manipulator zum Verladen von mit Fahrzeugen beladbaren Palletten. Interpretiert man das mit dem Bezugszeichen 15 versehene Hebewerk als Hubsäule und die mit dem Bezugszeichen versehenen Palletten 14 als Tragvorrichtung, so ist ein auf der Tragvorrichtung 14 angeordnetes Fahrzeug 20 nicht relativ zur Hubsäule 15 in Längsrichtung des Fahrzeugtransporters versetzbar.

Eine nicht gattungsgemäße Ladeplattform, ein nicht gattungsgemäßer Aufbau und ein nicht gattungsgemäßer Fahrzeugtransporter gehen aus der DE 20 2012 008 603 U1 hervor. Problematisch ist, dass sich die Räder wenigstens einer Achse des zu verladenden Fahrzeuges während des Versetzens des Fahrzeugs durch die Versatzvorrichtung drehen können mussten, was insbesondere bei angezogener Feststellbremse oder bei Allradfahrzeugen nicht ohne Weiters möglich ist.

Die EP 0 418 178 A1 offenbart den Oberbegriff des Anspruchs 1.

Aufgabe der Erfindung ist die Bereitstellung einer gattungsgemäßen Ladeplattform, eines gattungsgemäßen Aufbaus und eines gattungsgemäßen Fahrzeugtransporters bei welchen die oben diskutierten Probleme vermieden werden.

Diese Aufgabe wird durch eine Ladeplattform mit den Merkmalen des Anspruchs 1, einen Aufbau für einen Fahrzeugtransporter mit einer solchen Ladeplattform und einen Fahrzeugtransporter mit einer solchen Ladeplattform oder mit einem solchen Aufbau gelöst. Vorteilhafte Ausführungsformen der Erfindung sind in den abhängigen Ansprüchen definiert.

Weil bei der Erfindung die Tragvorrichtung durch die Hubvorrichtung heb- und senkbar ist und durch die Versatzvorrichtung als Ganzes versetzbar ist, ist eine Relativbewegung von Rädern des Fahrzeugs relativ zu einer Karosserie des Fahrzeugs nicht mehr erforderlich. Im gattungsgemäßen Stand der Technik war nur eine der wenigstens zwei Achsen beim Versatz an der Tragvorrichtung angeordnet und die andere Achse des Fahrzeugs wurde erst durch den Versatz auf der Tragvorrichtung angeordnet, wozu sich die Räder der anderen Achse drehen mussten. Auch konnte es bei einem Positionieren des versetzten Fahrzeugs in dessen endgültige Transportstellung zu einer weiteren Drehung der Räder beider Achsen zueinander kommen, wie dies etwa bei einem Absenken einer Achse gegenüber der anderen auftrat. Durch ein erfindungsgemäßes Heben und Senken der Tragvorrichtung kann auch eine solche Drehung der Räder beim Positionieren vermieden werden. Die Erfindung kann es somit beispielweise ermöglichen, dass die Räder eines Fahrzeugs vor einem Versetzten und/oder Heben und Senken festgestellt werden können und/oder an der Tragvorrichtung verzurrt werden können.

Dabei kann vorteilhaft sein, dass die Tragvorrichtung einen ersten Plattformteil zur Aufnahme wenigstens einer ersten Achse und einen zweiten Plattformteil zur Aufnahme wenigstens einer zweiten Achse des wenigstens einen zumindest zweiachsigen Fahrzeugs aufweist. Die Plattformteile können zum Abstellen der an den Achsen montierten Räder oder auch zur teilweisen Aufnahme der Räder, wie dies etwa bei einer sogenannten Brille der Fall ist, ausgebildet sein. Die Plattformteile können in ihrer Längen und/oder Breitenabmessung an die Räder des Fahrzeugs anpassbar sein. Wenn der zweite Plattformteil relativ zum ersten Plattformteil ortsfest an der Tragvorrichtung angeordnet oder anordenbar ist, kann eine Anpassung an den Abstand der Achsen eines Fahrzeugs vorgenommen werden und dieser auch arretiert werden.

Es kann vorgesehen sein, dass die Hubvorrichtung wenigstens eine Hubsäule und eine erste Antriebsvorrichtung zum Heben und Senken des wenigstens einen zumindest zweiachsigen Fahrzeugs aufweist. Als Hubsäule kann eine sich in Montagelage im Wesentlichen in Höhenrichtung der Ladplattform erstreckende Säulenkonstruktion verstanden werden, welche antreibbare Hubmittel für das Fahrzeug bzw. die Tragvorrichtung aufweist. Dabei kann die Tragvorrichtung im Bereich des zweiten Plattformteils an der wenigstens einen Hubsäule gelagert sein.

Es kann vorgesehen sein, dass der erste Plattformteil und der zweite Plattformteil über wenigstens eine Längsstrebe miteinander verbunden sind, wobei bevorzugt zwei Längsstreben vorgesehen sind, sodass sich ein rahmenförmiger Aufbau der Tragvorrichtung ergibt und der Raum zwischen den zwei Längsstreben und dem ersten und zweiten Plattformteil, frei bleibt. Durch das Vorsehen einer Längsstrebe kann eine feste oder festlegbare Verbindung zwischen den Plattformteilen ermöglicht werden. Ein Angreifen der Hubvorrichtung und/oder der Versatzvorrichtung an der Tragvorrichtung kann so an zumindest einem der Plattformteile und/oder den Längsstreben erfolgen.

Es kann weiter vorgesehen sein, dass zumindest der zweite Plattformteil entlang der wenigstens einen Längsstrebe verschiebbar angeordnet ist. Dadurch kann durch den Abstand der Plattformteile eine Anpassung an den Achsabstand eines Fahrzeugs erfolgen. Dabei kann eine zweite Antriebsvorrichtung zum Verschieben des zweiten Plattformteils entlang der wenigstens einen Längsstrebe vorgesehen sein.

Wenn der zweite Plattformteil um eine quer zur wenigstens einen Längsstrebe verlaufende Schwenkachse S verschwenkbar angeordnet ist oder der zweite Plattformteil lösbar an der wenigstens einen Längsstrebe befestigt ist, kann bei einer Nichtbenutzung der Ladeplattform einfach Ladefläche auf einem Fahrzeugtransporter nutzbar gemacht werden, die sonst durch Teile der Tragvorrichtung verbaut ist.

Es ist vorgesehen, dass die Versatzvorrichtung wenigstens einen Längsträger und eine dritte Antriebsvorrichtung zum Versetzen der Tragvorrichtung entlang des wenigstens einen Längsträgers aufweist. Die Versatzvorrichtung kann zum Versetzen der Tragvorrichtung in einer Richtung im Wesentlichen quer zur Bewegungsrichtung der Hubvorrichtung ausgebildet sein. Dazu kann sich der wenigstens eine Längsträger in Montagelage der Ladeplattform im Wesentlichen quer zur Höhenerstreckung der Hubsäule der Hubvorrichtung erstrecken.

Dabei kann von Vorteil sein, wenn die Tragvorrichtung über wenigstens ein erstes Schwenklager an dem wenigstens einen Längsträger gelagert oder lagerbar ist, sodass durch Verschwenken eine Neigung der Tragvorrichtung stufenlos veränderbar ist. Das wenigstens eine erste Schwenklager kann dabei entlang des wenigstens einen Längsträgers verfahrbar sein. Dadurch kann die Tragvorrichtung währen des Versetzens um eine Schwenkachse quer zur Versatzrichtung relativ zur Versatzvorrichtung verschwenkt werden. Auch kann die dritte Antriebsvorrichtung zum Verfahren des wenigstens einen ersten Schwenklagers entlang des wenigstens einen Längsträgers vorgesehen sein.

Es kann vorteilhaft sein, dass die Tragvorrichtung über wenigstens ein Loslager an der Hubvorrichtung gelagert ist. Ein solches Loslager kann beispielweise als Rolle ausgebildet sein, auf welcher die Tragvorrichtung aufliegt bzw. während eines Versatzes abläuft. Dabei kann die erste Antriebsvorrichtung zum Bewegen des wenigstens ein Loslagers relativ zur Hubvorrichtung vorgesehen sein.

Für den wenigstens einen Längsträger der Versatzvorrichtung kann vorgesehen sein, dass dieser über wenigstens ein zweites Schwenklager relativ zur Hubvorrichtung verschwenkbar gelagert ist, wobei vorzugsweise eine vierte Antriebsvorrichtung zum Verschwenken des Längsträgers vorgesehen ist. Ein Verschwenken kann in Montagelage der Ladeplattform in einer vertikalen Ebene erfolgen. Dadurch kann sich die Neigung des wenigstens einen Längsträgers relativ zur Hubvorrichtung verändern lassen. Der wenigstens eine Längsträger der Versatzvorrichtung kann beispielsweise an der Hubsäule der Hubvorrichtung schwenkbar gelagert sein.

Wie eingangs erwähnt, wird auch Schutz für einen Fahrzeugtransporter mit einer wie zuvor beschriebenen Ladeplattform begehrt.

Dabei kann vorteilhaft sein, dass benachbart zur Hubvorrichtung eine entlang einer Längserstreckung des Aufbaus verlaufende Plattform vorgesehen ist, auf welcher die Tragvorrichtung positionierbar ist, wobei die Tragvorrichtung mittels der Hubvorrichtung relativ zur Plattform anhebbar ist. Auch kann die Plattform selbst relativ zur Tragvorrichtung durch geeignete in Höhen- und Längsrichtung bewegbar sein. Die Tragvorrichtung kann teilweise auf der Plattform anordenbar sein, wodurch ein Anordnen der Achsen eines auf der Ladeplattform zu verladenden Fahrzeugs auf den Plattformteilen der Tragvorrichtung unter Benutzung (Befahren) der Plattform erfolgen.

Auch wird Schutz für einen Fahrzeugtransporter mit einer wie zuvor beschriebenen Ladeplattform oder einem wie zuvor beschriebenen Aufbau begehrt. Dabei kann vorgesehen sein, dass das zumindest eine Fahrzeug auf einer Ladeplattform oberhalb eines Führerhauses des Fahrzeugtransporters geladen wird.

Ausführungsbeispiele der Erfindung werden anhand der Figuren diskutiert. Es zeigen:
- Fig. 1a,1b: ein Ausführungsbeispiel einer erfindungsgemäßen Ladeplattform in isometrischer Ansicht im unbeladenen bzw. beladenen Zustand,
- Fig. 2a-c: eine Tragvorrichtung der Ladeplattform der Fig. 1 in isometrischer Ansicht, in Draufsicht und einer Seitenansicht,
- Fig. 3a-c: die Tragvorrichtung gemäß Fig. 2 mit verändertem Abstand zwischen erstem und zweitem Plattformteil in einer isometrischen Ansicht, einer Draufsicht und einer Seitenansicht,
- Fig. 4a-c: die Tragvorrichtung gemäß Fig. 3 in einem umgeklappten Zustand in einer isometrischen Ansicht, einer Draufsicht und einer Detailansicht,
- Fig. 5: ein Detail des ersten Schwenklagers und der dritten Antriebsvorrichtung,
- Fig. 6a,6b: ein Detail der Ladeplattform im Bereich der Hubvorrichtung ohne bzw. mit Tragvorrichtung,
- Fig. 7a,7b: einen erfindungsgemäßen Aufbau für zwei verschiedene Stellungen der Tragvorrichtung,
- Fig. 8a-f: eine Abfolge eines Beladevorganges mittels der erfindungsgemäßen Ladeplattform,
- Fig. 9: ein Detail eines Ausführungsbeispiels einer nicht erfindungsgemäßen Ladeplattform,
- Fig. 10: eine zusätzliche Möglichkeit der Beladung eines mit einer Ladeplattform ausgestatteten Fahrzeugtransporters und
- Fig. 11: eine weitere Möglichkeit der Beladung eines mit einer Ladeplattform ausgestatteten Fahrzeugtransporters.

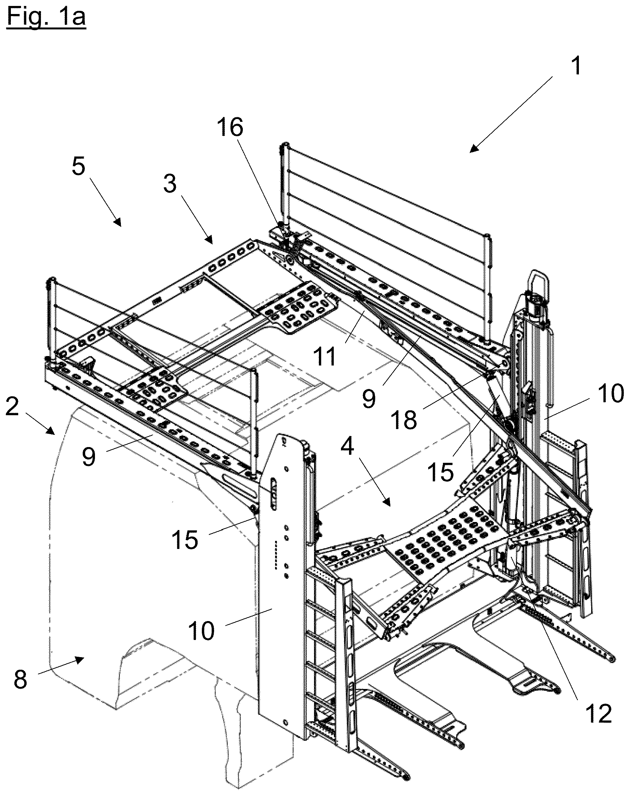

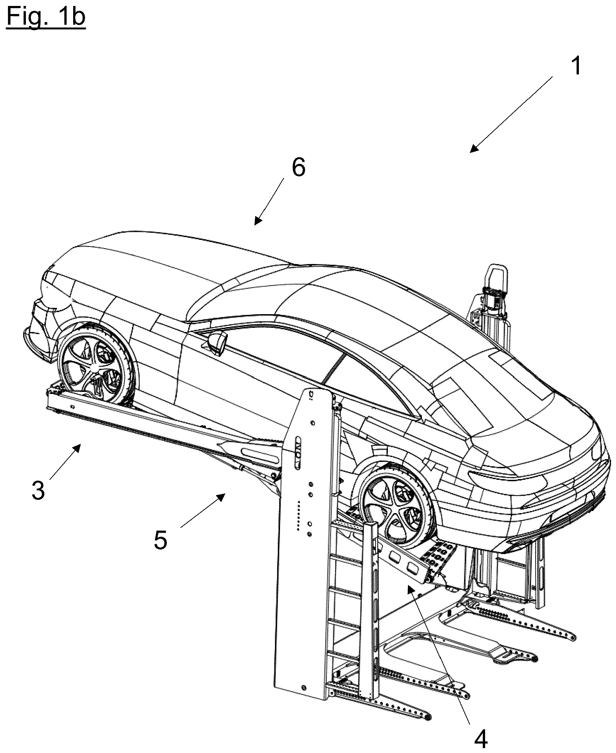

In Fig. 1 ist ein erstes Ausführungsbeispiel einer erfindungsgemäßen Ladeplattform 1 in isometrischer Ansicht gezeigt, wobei sich - wie angedeutet - ein Führerhaus 8 des Fahrzeugtransporters 2 im Montagezustand der Ladeplattform 1 in Fig. 1 links unterhalb der beiden erkennbaren Längsträger 9 befinden würde. Im gezeigten Zustand befindet sich die Tragvorrichtung 5, auf welcher hier ein zumindest zweiachsiges zweispuriges Fahrzeug 6 (oder zwei einspurige Fahrzeuge 6) anordenbar ist, oberhalb des Führerhauses 8. Dieser Zustand liegt vor, wenn der Verladezustand abgeschlossen und der Fahrzeugtransporter 2 zur Abfahrt bereit ist. In Fig. 1b ist eine mit einem zweiachsigen Fahrzeug 6 beladenen Ladeplattform 1 in einem solchen Zustand gezeigt.

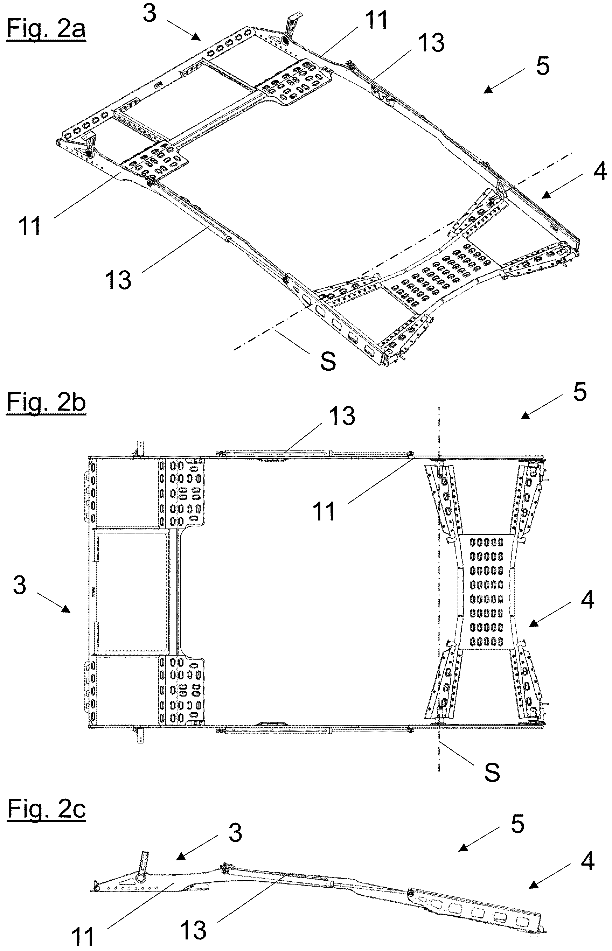

Die beiden Längsträger 9 bilden einen Teil der Versatzvorrichtung. Erkennbar sind weiters zwei Hubsäulen 10, welche einen Teil der Hubvorrichtung bilden. Die beiden Längsträger 9 sind in diesem Ausführungsbeispiel um zweite Schwenklager 18 schwenkbar an den beiden Hubsäulen 10 gelagert. Ein Verschwenken der Längsträger 9 kann mittels einer vierten Antriebsvorrichtung 15 erfolgen, welche hier als Hydraulikzylinder ausgebildet ist (alternativ könnte die vierte Antriebsvorrichtung 15 z. B. elektrisch ausgebildet sein). Die Hubsäulen 10 weisen selbst jeweils eine erste Antriebsvorrichtung 12 zum Heben und Senken der Tragvorrichtung 5 auf. Die erste Antriebsvorrichtung 12 ist hier als Hydraulikzylinder ausgebildet (alternativ könnte die erste Antriebsvorrichtung 12 z. B. elektrisch ausgebildet sein). Die Tragvorrichtung 5 ist um erste Schwenklager 16 im Bereich des ersten Plattformteils 3 (vgl. Fig. 2) schwenkbar an den Längsträgern 9 gelagert.

In Fig. 2 ist die Tragvorrichtung 5 im Detail erkennbar. Im gezeigten Ausführungsbeispiel der Tragvorrichtung 5 sind der erste und der zweite Plattformteil 3, 4 in Form einer Brille ausgebildet.

Räder der ersten Achse des zumindest zweiachsigen Fahrzeugs 6 sind am ersten Plattformteil 3 anordenbar und Räder der zweiten Achse des zumindest zweiachsigen Fahrzeugs 6 sind am zweiten Plattformteil 4 anordenbar. Der erste und der zweite Plattformteil 3, 4 sind mit feststellbarem Abstand zueinander durch zwei Längsstreben 11 miteinander verbunden, sodass sich ein rahmenförmiger Aufbau der Tragvorrichtung 5 ergibt und der Raum zwischen den zwei Längsstreben 11 und dem ersten und zweiten Plattformteil 3, 4 frei bleibt. Durch den frei bleibenden Raum kann das Führerhaus 8 mit seiner Oberseite in diesen Raum hineinragen, wodurch das Fahrzeug 6 näher an das Führerhaus 8 bringbar ist.

Der zweite Plattformteil 4 ist wie gezeigt an den Längsstreben 11 verschiebbar ausgebildet, um eine Anpassung an unterschiedliche Achsabstände zu gestatten. Ein Verschieben des zweiten Plattformteils 4 kann mittels einer zweiten Antriebsvorrichtung 13 erfolgen, welche hier als Hydraulikzylinder ausgebildet ist (alternativ könnte die zweite Antriebsvorrichtung 13 z. B. elektrisch ausgebildet sein). Ein Verschieben kann auch manuell ohne zweite Antriebsvorrichtung 13 erfolgen.

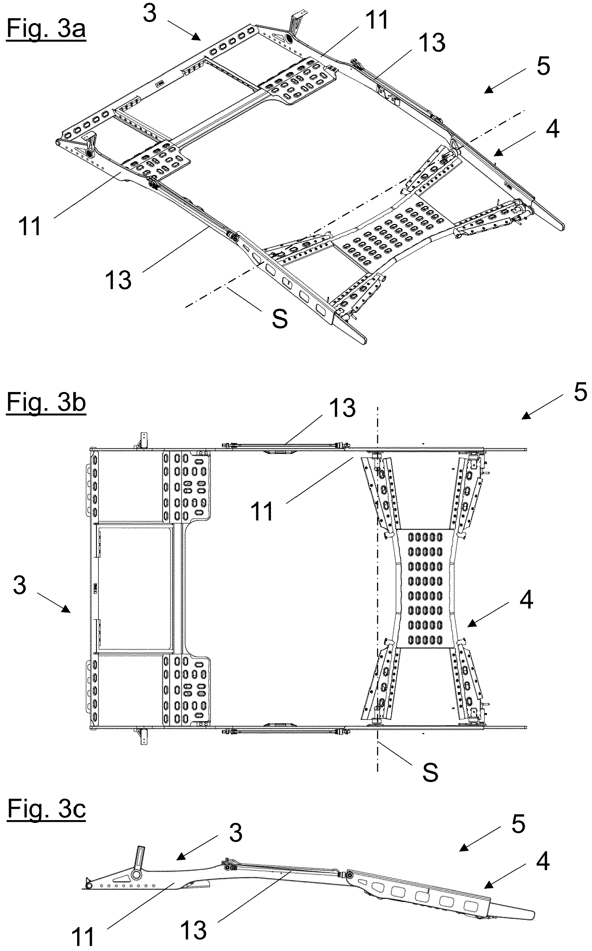

Fig. 3 zeigt eine Tragvorrichtung 5 gemäß der Fig. 2, wobei durch ein Verschieben des zweiten Plattformteils 4 in Richtung des ersten Plattformteils 3 der Abstand zwischen dem ersten und dem zweiten Plattformteil 3, 4 verringert wurde.

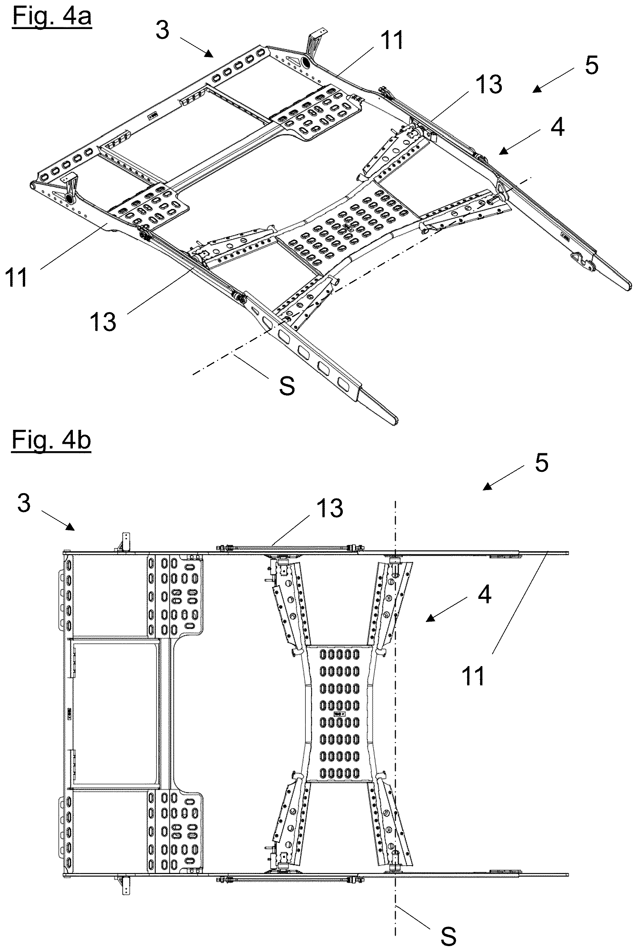

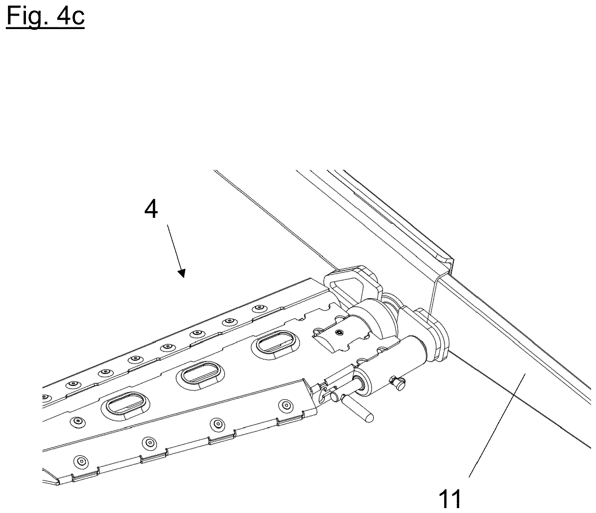

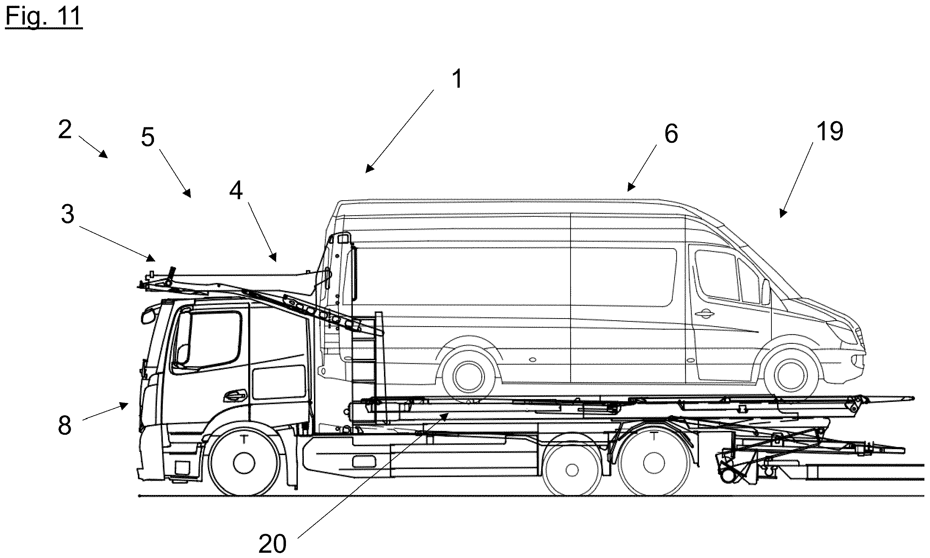

Bei einer Nutzung des Fahrzeugtransporters 2, bei welcher die Tragvorrichtung 5 unbeladen bleibt, kann der zweite Plattformteil 4, der in diesem Beispiel um eine Schwenkachse S schwenkbar an den Längsstreben 11 gelagert ist, unabhängig vom ersten Plattformteil 3 in Richtung des ersten Plattformteils 3 geklappt werden (vgl. Fig. 4a, 4b). Dadurch entsteht ein Freiraum für eine Ladung auf einer Plattform 20 (diese ist in Fig. 11 erkennbar). Fig. 4c zeigt ein Detail eines Beispiels einer Verriegelungsvorrichtung zum Verriegeln der Schwenkstellung des zweiten Plattformteils 4.

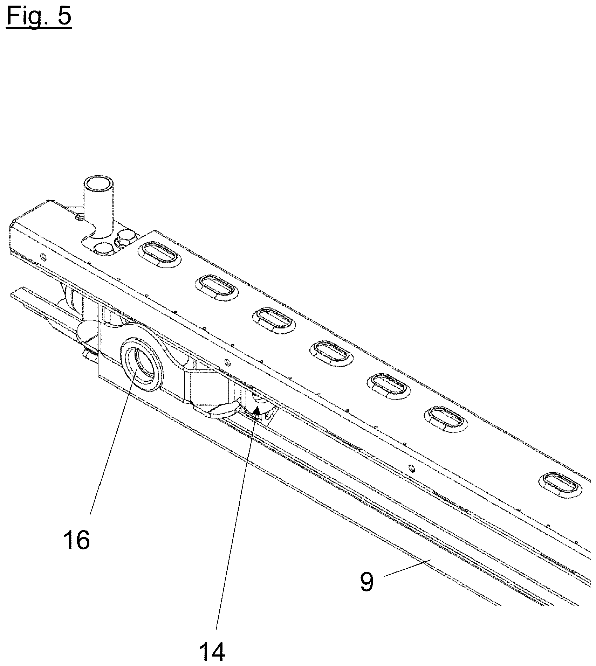

Fig. 5 zeigt ein Detail des ersten Schwenklagers 16 und der dritten Antriebsvorrichtung 14, welche in diesem Fall als hydraulischer Spindeltrieb ausgebildet ist (eine elektrische Ausbildung oder eine Ausbildung mit Hydraulikzylindern wäre auch denkbar). Mittels der dritten Antriebsvorrichtung 14 ist das erste Schwenklager 16 entlang einer im Längsträger 9 ausgebildeten Führung verfahrbar.

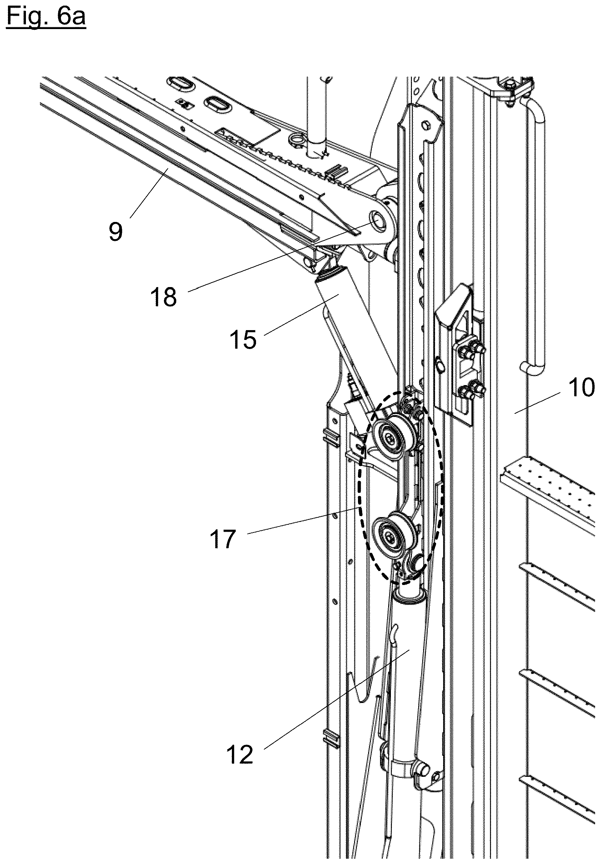

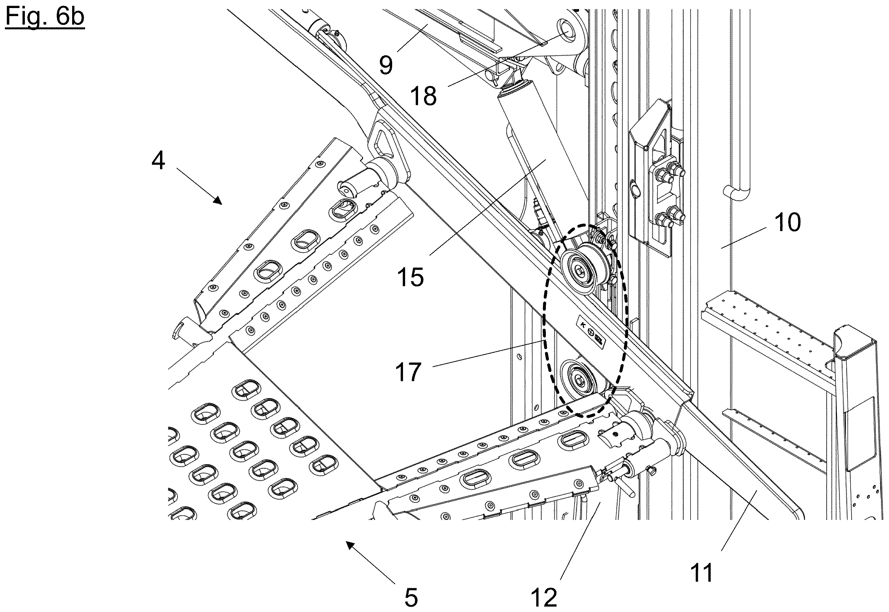

Fig. 6 zeigt ein Detail der Ladeplattform 1 im Bereich der Hubvorrichtung ohne bzw. mit Tragvorrichtung 5. Erkennbar ist die erste Antriebsvorrichtung 12, welche zum Heben und Senken eines Loslagers 17, über welches die Tragvorrichtung 5 an der Hubsäule 10 gelagert ist, dient. Weiter ist der über ein zweites Schwenklager 18 schwenkbar an der Hubsäule 10 gelagerte Längsträger 9 erkennbar, wobei zum Verschwenken des Längsträgers 9 eine vierte Antriebsvorrichtung 15 vorgesehen ist. Fig. 6b zeigt eine Darstellung gemäß Fig. 6a mit zusätzlich dargestellter Tragvorrichtung 5. Dabei ist erkennbar, dass die Längsstrebe 11 der Tragvorrichtung 5 auf dem Loslager 17 aufliegt.

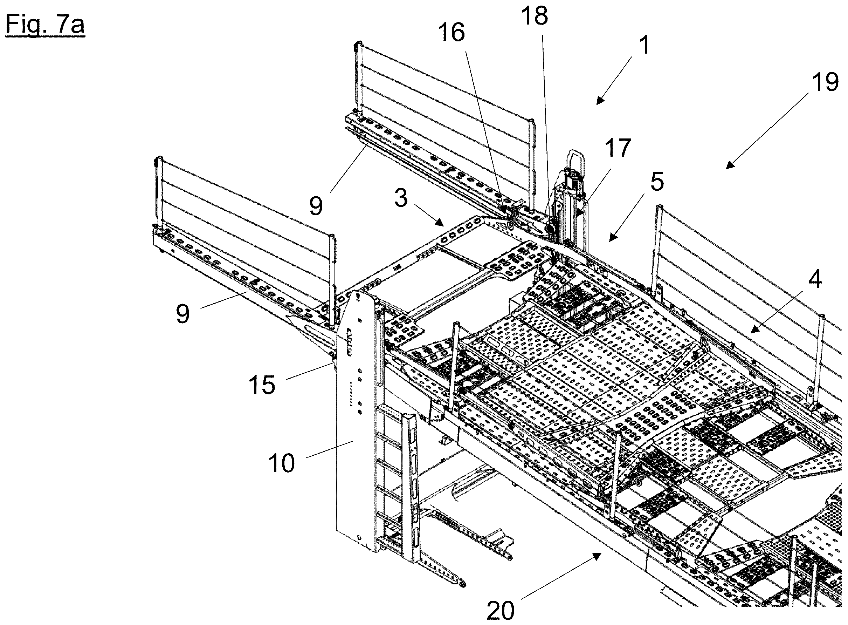

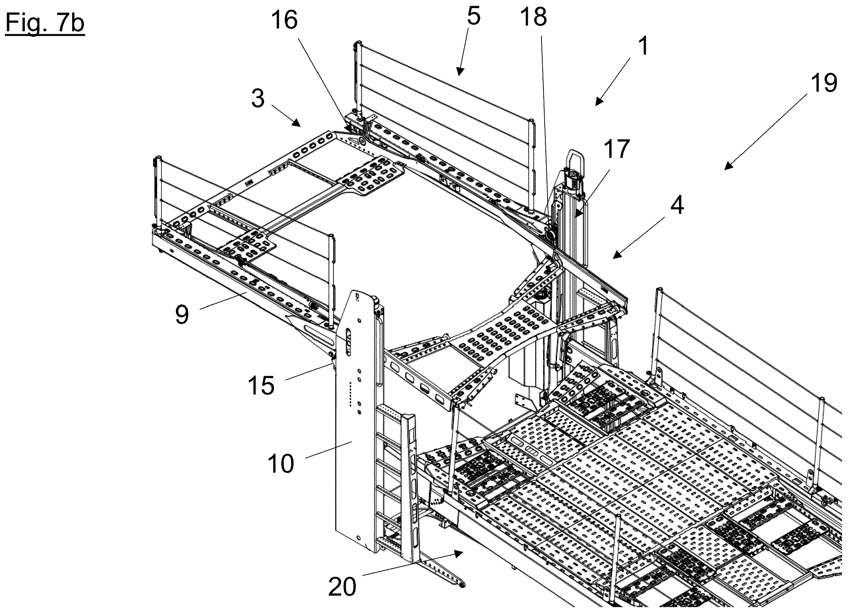

Fig. 7a zeigt einen erfindungsgemäßen Aufbau 19 mit einer Ladeplattform 1 und einer Plattform 20. Die Tragvorrichtung 5 der Ladeplattform 1 liegt teilweise auf der Plattform 20 auf. Dadurch kann die Plattform 20 während des Beladens der Tragvorrichtung 5 durch das aufzuladende Fahrzeug 6 befahren werden. In Zustand der Fig. 7b wurde die Tragvorrichtung 5 nach einem Heben mittels der Hubvorrichtung durch die Versatzvorrichtung in Richtung des Führerhauses 8 versetzt.

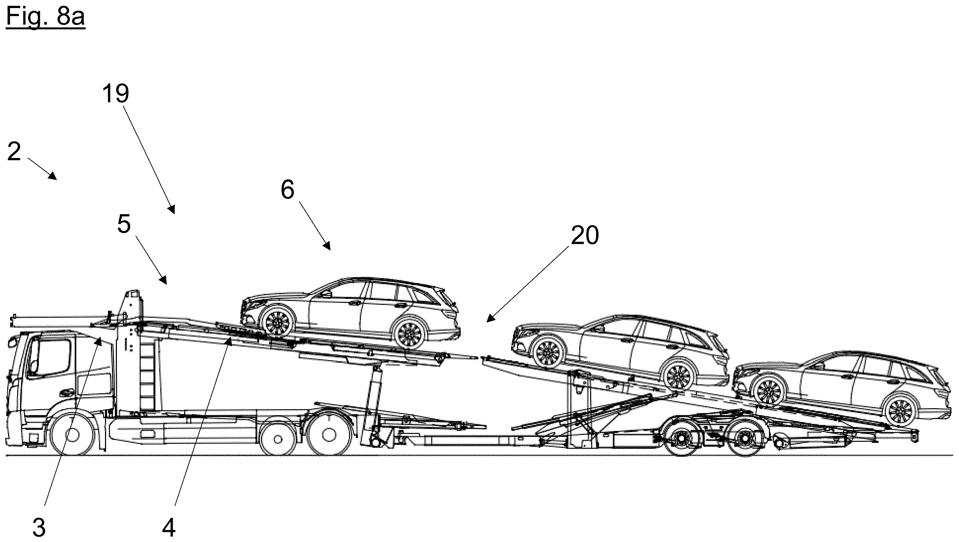

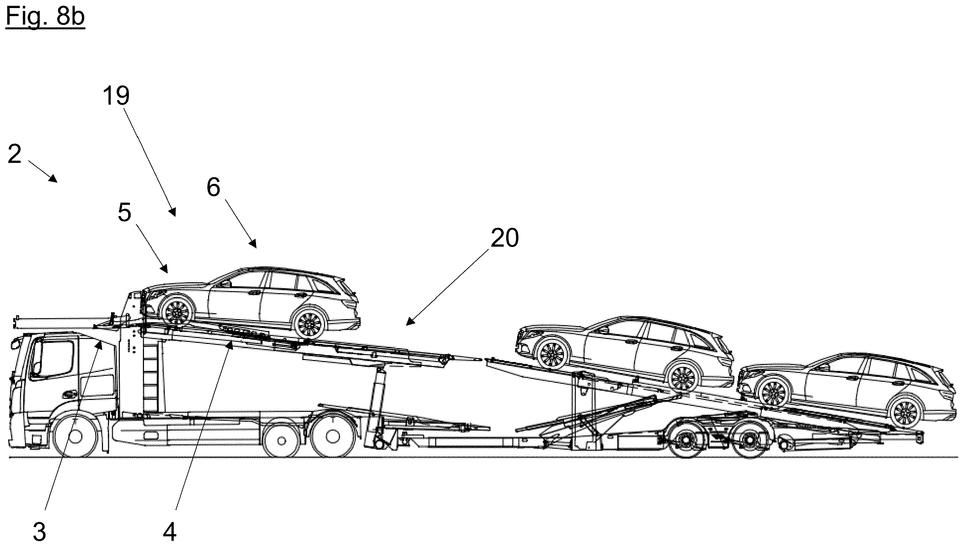

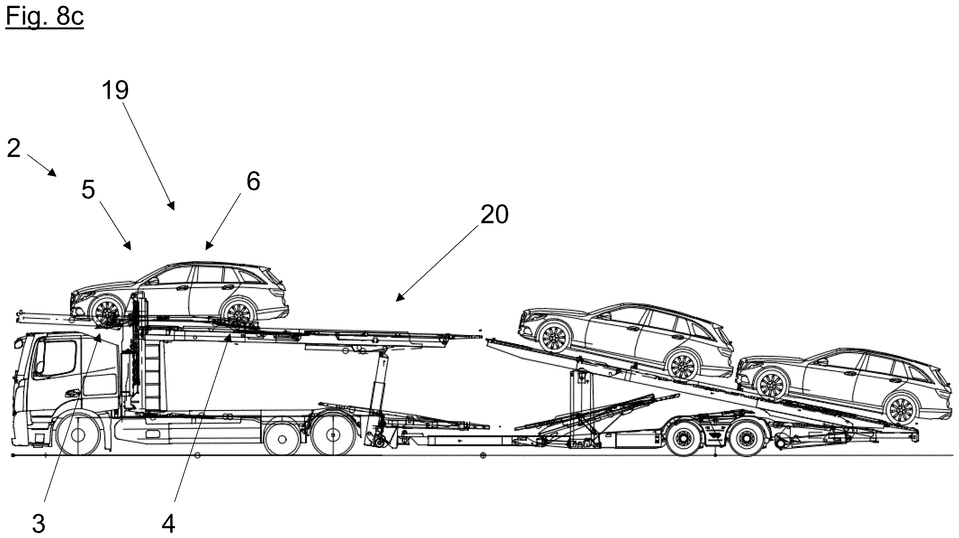

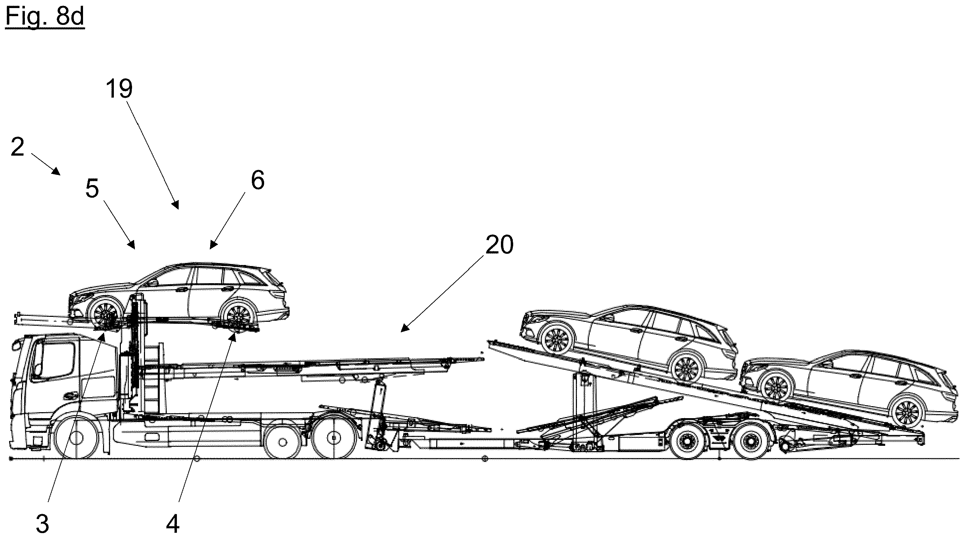

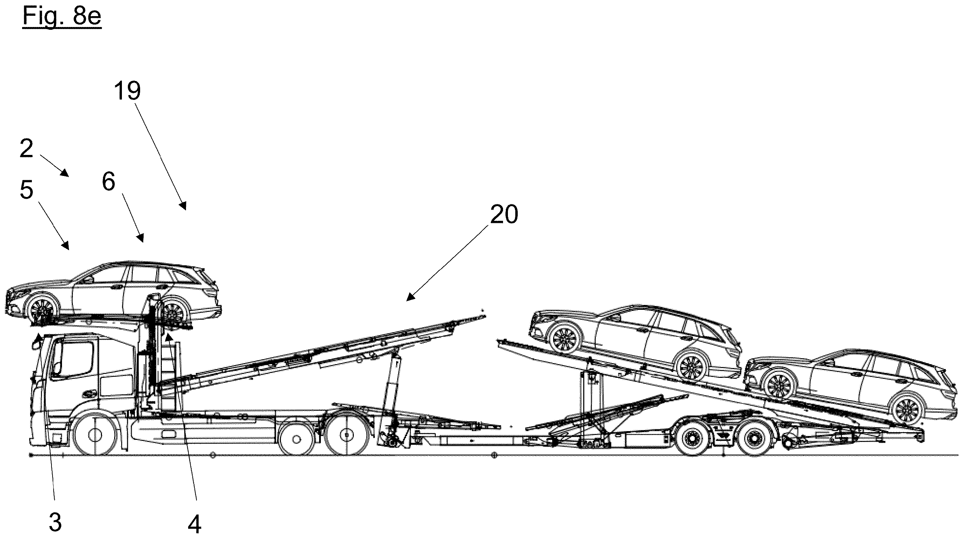

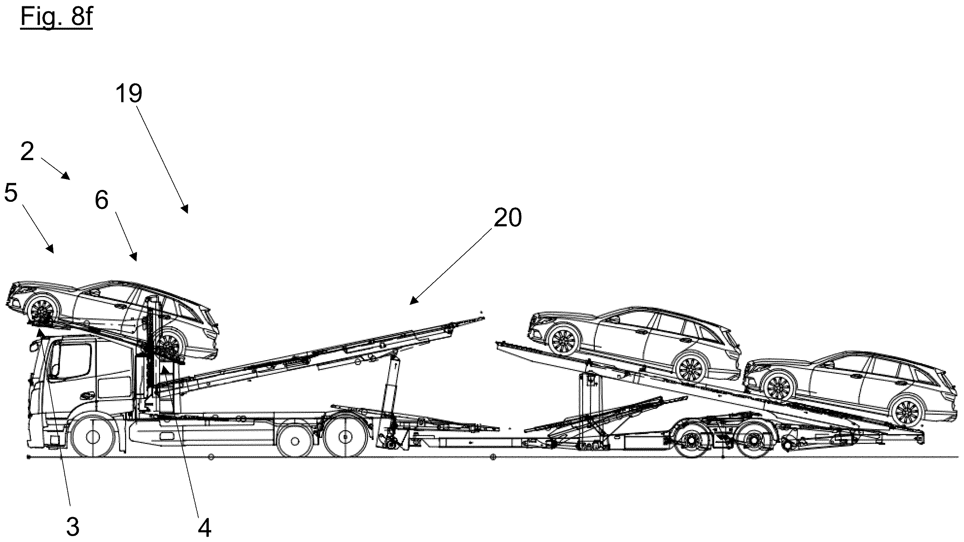

Fig. 8 zeigt eine Abfolge eines Beladevorganges (bzw. in umgekehrter Reihenfolge einen Entladevorgang) mittels der erfindungsgemäßen Ladeplattform 1.

Fig. 8a zeigt einen Fahrzeugtransporter 2, auf dessen Plattform 20 des Aufbaus 19 sich ein Fahrzeug 6 befindet. Die Position der Tragvorrichtung 5 entspricht dabei im Wesentlichen jener der Fig. 7a.

In Fig. 8b ist das Fahrzeug 6 teilweise (mit den Rädern der ersten Achse) in den Bereich der Tragvorrichtung 5 über die Plattform 20 eingefahren.

In Fig. 8c ist das Fahrzeug 6 vollständig auf die Tragvorrichtung 5 aufgefahren, wobei die Räder der ersten Achse auf dem ersten Plattformteil 3 und die Räder der zweiten Achse auf dem zweiten Plattformteil 4 angeordnet sind. Ein Anordnen der Räder der zweiten Achse auf dem zweiten Plattformteil 4 kann auch durch ein Verschieben des zweiten Plattformteils 4 relativ zum ersten Plattformteil 3 bei abgestelltem Fahrzeug 6, beispielsweise durch die zweite Antriebsvorrichtung 13, erfolgt sein. Jetzt kann ein Festellen der Räder durch eine Feststellbremse des Fahrzeugs 6 und ein Verzurren der Räder des Fahrzeugs 6 durch ein Zurrmittel erfolgen.

Das Verbringen des Fahrzeugs 6 durch die Ladeplattform 1 ist in der Abfolge der Fig. 8d-f gezeigt.

In Fig. 8d ist das Fahrzeug 6 durch die Tragvorrichtung 5 von der Plattform 20 weg gehoben worden. Dies kann durch ein Anheben der Tragvorrichtung 5 mittels der Hubvorrichtung oder durch ein Absenken der Plattform 20 relativ zur Tragvorrichtung 5 erfolgt sein.

In Fig. 8e ist die Tragvorrichtung 5 mittels der Versatzvorrichtung über das Führerhaus 8 bewegt worden. Fig. 8f zeigt die endgültige Transportstellung des Fahrzeugs 6.

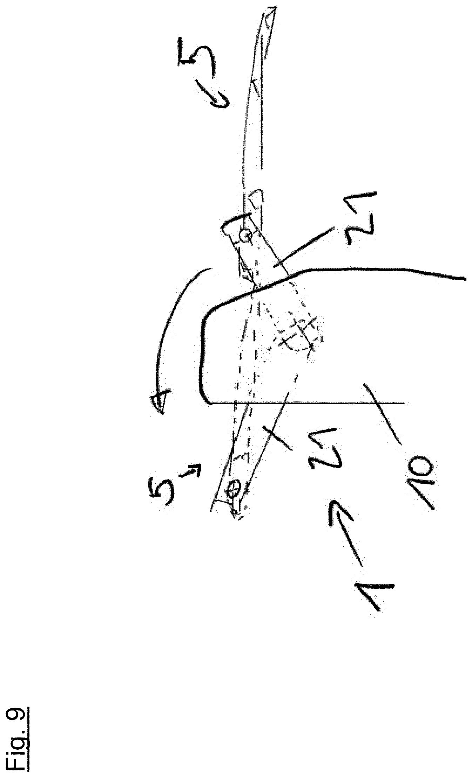

Fig. 9 zeigt ein Ausführungsbeispiel einer nicht erfindungsgemäßen Ladeplattform 1, wobei sich der Unterschied zum oben diskutierten Ausführungsbeispiel durch die andersartige Ausbildung der Versatzvorrichtung ergibt. Anstelle einer translatorisch arbeitenden Versatzvorrichtung ist hier eine mit Schwenkarmen 21 versehene rotatorisch arbeitende Versatzvorrichtung vorgesehen. Längsträger 9 sind hier nicht erforderlich, weil die Schwenkarme 21 unmittelbar an der Tragvorrichtung 5 angreifen können.

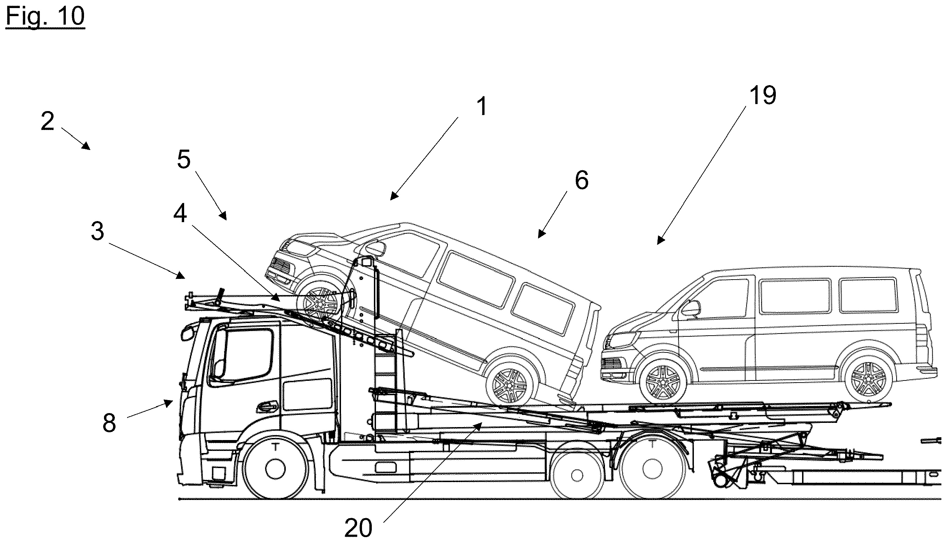

In Fig. 10 ist eine Möglichkeit zur Beladung einer Ladeplattform 1 gezeigt, bei welcher die Tragvorrichtung 5 mittels der Versatzvorrichtung über das Führerhaus 8 bewegt worden ist und der zweite Plattformteil 4 in Richtung des ersten Plattformteils 3 geklappt wurde (vgl. Fig. 4a, 4b). In der dargestellten Transportstellung des Fahrzeugs 6 ist dieses mit den Rädern der Vorderachse auf dem umgeklappten zweiten Plattformteil 4 abgestellt und mit den Rädern der Hinterachse auf der Plattform 20 des Aufbaus 19 des Fahrzeugtransporters 2 abgestellt.

In Fig. 11 ist eine weitere Möglichkeit zur Beladung eines mit einer Ladeplattform 1 ausgestatteten Fahrzeugtransporters 2 gezeigt. Die Tragvorrichtung 5 wurde auch hier mittels der Versatzvorrichtung über das Führerhaus 8 bewegt. Auch ist der zweite Plattformteil 4 in Richtung des ersten Plattformteils 3 geklappt worden (vgl. wieder Fig. 4a, 4b). In der dargestellten Transportstellung des Fahrzeugs 6 ist dieses mit den Rädern der Vorderachse und mit den Rädern der Hinterachse auf der Plattform 20 des Aufbaus 19 des Fahrzeugtransporters 2 abgestellt. Dabei steht das Fahrzeug 6 unter optimaler Ausnutzung der auf der Plattform 20 verfügbaren Ladefläche in den durch das Wegklappen des zweiten Plattformteils 4 entstandenen Freiraum hinein.

### Bezugszeichenliste:

- 1: Ladeplattform
- 2: Fahrzeugtransporter
- 3: erster Plattformteil
- 4: zweiter Plattformteil
- 5: Tragvorrichtung
- 6: Fahrzeug
- 7: Antriebsvorrichtung
- 8: Führerhaus des Fahrzeugtransporters
- 9: Längsträger
- 10: Hubsäule
- 11: Längsstrebe der Tragvorrichtung
- 12: erste Antriebsvorrichtung
- 13: zweite Antriebsvorrichtung
- 14: dritte Antriebsvorrichtung
- 15: vierte Antriebsvorrichtung
- 16: erste Schwenklager (für die Tragvorrichtung)
- 17: Loslager der Tragvorrichtung
- 18: zweites Schwenklager (für den Längsträger)
- 19: Aufbau
- 20: Plattform
- 21: Schwenkarme der Versatzvorrichtung

- S: Schwenkachse
- L: Längsrichtung des Fahrzeugtransporters

## Patentansprüche

1. Ladeplattform (1) für einen Fahrzeugtransporter (2), mit:
- einer Tragvorrichtung (5), auf welcher wenigstens ein zumindest zweiachsiges Fahrzeug (6) anordenbar ist,
- wenigstens einer Hubvorrichtung, durch welche im Montagezustand der Ladeplattform (1) an einem Fahrzeugtransporter (2) das wenigstens eine zumindest zweiachsige Fahrzeug (6) heb- und senkbar und/oder verschwenkbar ist, wobei die wenigstens eine Hubvorrichtung eine Hubsäule (10) aufweist,
- wenigstens einer Versatzvorrichtung, durch welche im Montagezustand der Ladeplattform (1) an einem Fahrzeugtransporter (2) das wenigstens eine zumindest zweiachsige Fahrzeug (6) in einer Längsrichtung (L) des Fahrzeugtransporters (2) relativ zur Hubsäule (10) versetzbar ist,
wobei
- die Tragvorrichtung (5) durch die Hubvorrichtung heb- und senkbar ist und
- die Tragvorrichtung (5) durch die Versatzvorrichtung als Ganzes versetzbar ist, **dadurch gekennzeichnet, dass**
die Versatzvorrichtung wenigstens einen Längsträger (9) und eine dritte Antriebsvorrichtung (14) zum Versetzen der Tragvorrichtung (5) entlang des wenigstens einen Längsträgers (9) aufweist.

2. Ladeplattform nach Anspruch 1, wobei die Tragvorrichtung (5) einen ersten Plattformteil (3) zur Aufnahme wenigstens einer ersten Achse und einen zweiten Plattformteil (4) zur Aufnahme wenigstens einer zweiten Achse des wenigstens einen zumindest zweiachsigen Fahrzeugs (6) aufweist und wobei vorzugsweise der zweite Plattformteil (4) relativ zum ersten Plattformteil (3) ortsfest an der Tragvorrichtung (5) angeordnet oder anordenbar ist.

3. Ladeplattform nach wenigstens einem der vorangehenden Ansprüche, wobei der erste Plattformteil (3) und der zweite Plattformteil (4) über wenigstens eine Längsstrebe (11) miteinander verbunden sind, wobei bevorzugt zwei Längsstreben (11) vorgesehen sind, sodass sich ein rahmenförmiger Aufbau der Tragvorrichtung (5) ergibt und der Raum zwischen den zwei Längsstreben (11) und dem ersten und zweiten Plattformteil (3, 4) frei bleibt.

4. Ladeplattform nach dem vorangehenden Anspruch, wobei zumindest der zweite Plattformteil (4) entlang der wenigstens einen Längsstrebe (11) verschiebbar angeordnet ist, wobei vorzugsweise eine zweite Antriebsvorrichtung (13) zum Verschieben des zweiten Plattformteils (4) entlang der wenigstens einen Längsstrebe (11) vorgesehen ist.

5. Ladeplattform nach wenigstens einem der beiden vorangehenden Ansprüche, wobei zumindest der zweite Plattformteil (4) um eine quer zur wenigstens einen Längsstrebe (11) verlaufende Schwenkachse (S) verschwenkbar angeordnet ist oder der zweite Plattformteil (4) lösbar an der wenigstens einen Längsstrebe (11) befestigt ist.

6. Ladeplattform nach dem vorangehenden Anspruch, wobei die Tragvorrichtung (5) über wenigstens ein erstes Schwenklager (16) an dem wenigstens einen Längsträger (9) gelagert oder lagerbar ist, sodass durch Verschwenken eine Neigung der Tragvorrichtung (5) stufenlos veränderbar ist, wobei das wenigstens eine erste Schwenklager (16) entlang des wenigstens einen Längsträgers (9) verfahrbar ist und wobei die dritte Antriebsvorrichtung (14) zum Verfahren des wenigstens einen ersten Schwenklagers (16) entlang des wenigstens einen Längsträgers (9) vorgesehen ist.

7. Ladeplattform nach wenigstens einem der vorangehenden Ansprüche, wobei die Hubvorrichtung wenigstens eine Hubsäule (10) und eine erste Antriebsvorrichtung (12) zum Heben und Senken des wenigstens einen zumindest zweiachsigen Fahrzeugs (6) aufweist.

8. Ladeplattform nach dem vorangehenden Anspruch, wobei die Tragvorrichtung (5) über wenigstens ein Loslager (17) an der Hubvorrichtung gelagert ist und vorzugsweise die erste Antriebsvorrichtung (12) zum Bewegen des wenigstens ein Loslagers (17) relativ zur Hubvorrichtung vorgesehen ist.

9. Ladeplattform nach wenigstens einem der Ansprüche 6 oder 8, wobei der wenigstens eine Längsträger (9) über wenigstens ein zweites Schwenklager (18) relativ zur Hubvorrichtung verschwenkbar gelagert ist, wobei vorzugsweise eine vierte Antriebsvorrichtung (15) zum Verschwenken des Längsträgers (9) vorgesehen ist.

10. Aufbau (19) für einen Fahrzeugtransporter (2) mit einer Ladeplattform (1) nach wenigstens einem der vorangehenden Ansprüche.

11. Aufbau nach dem vorangehenden Anspruch, wobei benachbart zur Hubvorrichtung eine entlang einer Längserstreckung des Aufbaus (19) verlaufende Plattform (20) vorgesehen ist, auf welcher die Tragvorrichtung (5) positionierbar ist, wobei die Tragvorrichtung (5) mittels der Hubvorrichtung relativ zur Plattform (20) anhebbar ist.

12. Fahrzeugtransporter (2) mit einer Ladeplattform (1) nach wenigstens einem der Ansprüche 1 bis 9 oder mit einem Aufbau (19) nach wenigstens einem der Ansprüche 10 oder 11.

## Claims

1. A load platform (1) for a vehicle transporter (2) comprising:
- a carrying arrangement (5) on which at least one at least two-axle vehicle (6) can be arranged,
- at least one lifting device by which in the assembled state of the load platform (1) on a vehicle transporter (2) the at least one at least two-axle vehicle (6) can be lifted and lowered and/or pivoted, wherein the at least one lifting device has a lifting column (10),
- at least one displacement device by which in the assembled state of the load platform (1) on a vehicle transporter (2) the at least one at least two-axle vehicle (6) can be displaced in a longitudinal direction (L) of the vehicle transporter (2) relative to the lifting column (10),
wherein
- the carrying arrangement (5) can be lifted and lowered by the lifting device, and
- the carrying arrangement (5) can be displaced as a whole by the displacement device, **characterised in that**
the displacement device has at least one longitudinal bearer (9) and a third drive device (14) for displacement of the carrying arrangement (5) along the at least one longitudinal bearer (9).

2. A load platform according to claim 1 wherein the carrying arrangement (5) has a first platform portion (3) for receiving at least a first axle and a second platform portion (4) for receiving at least a second axle of the at least one at least two-axle vehicle (6) and wherein preferably the second platform portion (4) is or can be arranged on the carrying arrangement (5) stationarily relative to the first platform portion (3).

3. A load platform according to at least one of the preceding claims wherein the first platform portion (3) and the second platform portion (4) are connected together by way of at least one longitudinal strut (11), wherein preferably there are provided two longitudinal struts (11) so that a frame-shaped structure of the carrying arrangement (5) is afforded and the space between the two longitudinal struts (11) and the first and second platform portions (3, 4) remains free.

4. A load platform according to the preceding claim wherein at least the second platform portion (4) is arranged displaceably along the at least one longitudinal strut (11), wherein preferably there is provided a second drive device (13) for displacement of the second platform portion (4) along the at least one longitudinal strut (11).

5. A load platform according to at least one of the two preceding claims wherein at least the second platform portion (4) is arranged pivotably about a pivot axis (S) extending transversely relative to the at least one longitudinal strut (11) or the second platform portion (4) is releasably fixed to the at least one longitudinal strut (11).

6. A load platform according to the preceding claim wherein the carrying arrangement (5) is or can be mounted by way of at least one first pivot bearing (16) to the at least one longitudinal bearer (9) so that an inclination of the carrying arrangement (5) can be steplessly altered by pivotal movement, wherein the at least one first pivot bearing (16) is displaceable along the at least one longitudinal bearer (9) and wherein the third drive device (14) is provided for displacement of the at least one first pivot bearing (16) along the at least one longitudinal bearer (9).

7. A load platform according to at least one of the preceding claims wherein the lifting device has at least one lifting column (10) and a first drive device (12) for lifting and lowering the at least one at least two-axle vehicle (6).

8. A load platform according to the preceding claim wherein the carrying arrangement (5) is mounted by way of at least one floating bearing (17) to the lifting device and preferably the first drive device (12) is provided for moving the at least one floating bearing (17) relative to the lifting device.

9. A load platform according to at least one of claims 6 and 8 wherein the at least one longitudinal bearer (9) is mounted pivotably relative to the lifting device by way of at least one second pivot bearing (18), wherein preferably there is provided a fourth drive device (15) for pivotal movement of the longitudinal bearer (9).

10. A structure (19) for a vehicle transporter (2) having a load platform (1) according to at least one of the preceding claims.

11. A structure according to the preceding claim wherein provided in adjacent relationship with the lifting device is a platform (20) extending along a longitudinal extent of the structure (19) and on which the carrying arrangement (5) can be positioned, wherein the carrying arrangement (5) can be lifted relative to the platform (20) by means of the lifting device.

12. A vehicle transporter (2) having a load platform (11) according to at least one of claims 1 to 9 or a structure (19) according to at least one of claims 10 and 11.

## Revendications

1. Plate-forme de chargement (1) pour un transporteur de véhicules (2), avec :
- un dispositif porteur (5) sur lequel peut être disposé au moins un véhicule à deux essieux (6),
- au moins un dispositif élévateur par lequel, à l'état de montage de la plate-forme de chargement (1) sur un transporteur de véhicules (2), le au moins un véhicule à au moins deux essieux (6) peut monter et descendre et / ou pivoter, dans laquelle le au moins un dispositif élévateur présente une colonne de levage (10),
- au moins un dispositif de déplacement, par lequel à l'état de montage de la plate-forme de chargement (1) sur un transporteur de véhicules (2), le au moins un véhicule à au moins deux essieux (6) peut être déplacé dans un sens de longueur (L) du transporteur de véhicules (2) par rapport à la colonne de levage (10),
dans laquelle
- le dispositif porteur (5) peut monter et descendre grâce au dispositif élévateur et
- le dispositif porteur (5) peut être déplacé tout entier par le dispositif de déplacement,
**caractérisée en ce que** le dispositif de déplacement présente au moins un longeron (9) et un troisième dispositif d'entraînement (14) pour déplacer le dispositif porteur (5) le long du au moins un longeron (9).

2. Plate-forme de chargement selon la revendication 1, dans laquelle le dispositif porteur (5) présente une première partie de plate-forme (3) pour loger au moins un premier axe et une deuxième partie de plate-forme (4) pour loger au moins un deuxième axe du au moins un véhicule à au moins deux essieux (6) et dans lequel, de préférence, la deuxième partie de plate-forme (4) par rapport à la première partie de plate-forme (3) est disposée ou peut être disposée de façon fixe sur le dispositif porteur (5).

3. Plate-forme de chargement selon au moins l'une des revendications précédentes, dans laquelle la première partie de plate-forme (3) et la deuxième partie de plate-forme (4) sont reliées ensemble par au moins une entretoise longitudinale (11), dans laquelle, de préférence, deux entretoises longitudinales (11) sont prévues, de sorte qu'il en résulte une structure en forme de cadre du dispositif porteur (5) et l'espace entre les deux entretoises longitudinales (11) et la première et la deuxième partie de plate-forme (3, 4) reste libre.

4. Plate-forme de chargement selon la revendication précédente, dans laquelle au moins la deuxième partie de plate-forme (4) est disposée de façon déplaçable le long de la au moins une entretoise longitudinale (11), dans laquelle, de préférence, un deuxième dispositif d'entraînement (13) est prévu pour déplacer la deuxième partie de plate-forme (4) le long de la au moins une entretoise longitudinale (11).

5. Plate-forme de chargement selon au moins l'une des deux revendications précédentes, dans laquelle au moins la deuxième partie de plate-forme (4) est disposée de façon pivotante autour d'un pivot (S) passant transversalement à au moins une entretoise longitudinale (11), ou la deuxième partie de plate-forme (4) est fixée de façon détachable à la au moins une entretoise longitudinale (11).

6. Plate-forme de chargement selon la revendication précédente, dans laquelle le dispositif porteur (5) est logé ou peut être logé par l'intermédiaire d'au moins un premier palier pivotant (16) sur le au moins un longeron (9), de sorte que, par pivotement, une inclinaison du dispositif porteur (5) peut être modifiée progressivement, dans laquelle le au moins un premier palier pivotant (16) est mobile le long du au moins un longeron (9) et dans laquelle le troisième dispositif d'entraînement (14) est prévu pour déplacer le au moins un premier palier pivotant (16) le long du au moins un longeron (9).

7. Plate-forme de chargement selon au moins l'une des revendications précédentes, dans laquelle le dispositif élévateur présente au moins une colonne de levage (10) et un premier dispositif d'entraînement (12) pour lever et descendre le au moins un véhicule à au moins deux essieux (6).

8. Plate-forme de chargement selon la revendication précédente, dans laquelle le dispositif porteur (5) est logé par l'intermédiaire d'au moins un palier libre (17) sur le dispositif élévateur et, de préférence, le premier dispositif d'entraînement (12) est prévu pour déplacer le au moins un palier libre (17) par rapport au dispositif élévateur.

9. Plate-forme de chargement selon au moins l'une des revendications 6 ou 8, dans laquelle le au moins un longeron (9) est logé de façon pivotante par rapport au dispositif élévateur par l'intermédiaire d'au moins un deuxième palier pivotant (18), dans laquelle, de préférence, un quatrième dispositif d'entraînement (15) est prévu pour pivoter le longeron (9).

10. Structure (19) pour un transporteur de véhicules (2) avec une plate-forme de chargement (1) selon au moins l'une des revendications précédentes.

11. Structure selon la revendication précédente, dans laquelle est prévue, de façon contiguë au dispositif élévateur, une plate-forme (20) passant le long d'une extension longitudinale de la structure (19), sur laquelle peut être positionné le dispositif porteur (5), dans laquelle le dispositif porteur (5) peut être soulevé par rapport à la plate-forme (20) au moyen du dispositif élévateur.

12. Transporteur de véhicules (2) avec une plate-forme de chargement (1) selon au moins l'une des revendications 1 à 9 ou avec une structure (19) selon au moins l'une des revendications 10 ou 11.
